# EUROPEAN PATENT APPLICATION

(11) **EP 2 284 759 A2**
(43) Date of publication of application: **16.02.2011**
(21) Application number: 10163616.5
(22) Date of filing: 21.05.2010
(51) Int. Cl.: G06F 21/02

(54) **Cascaded combination structure of flash disks to create security function**

(30) Priority: 30.07.2009 TW 098125741
(71) Applicant: Walton Advanced Engineering Inc., Kaohsiung City 806 (TW)
(72) Inventor: Yu, Hong-Chi, Kaohsiung City (TW); Chang, Mao-Ting, Kaohsiung City (TW)
(74) Representative: Delumeau, François Guy

(57) **Abstract**

Disclosed is a cascaded combination structure (100) of flash disks to create security function, comprising of a plurality of data disks (110) and a key disk (120). Each of the data disks includes a public zone and a private zone matched with the key disk. When the key disk is series-connected with the data disks, the private zone can be displayed and load/save by a public program in the key disk. Accordingly, there can be secured and hid the data in the private zone so that the data in the private zone is unable to be embezzled by other illegal users.

## Description

### BACKGROUND OF THE INVENTION

### 1. Field of the Invention

The present invention relates to a static storage device and specifically to a cascaded combination structure of flash disks to create security function.

### 2. Prior art description

In the wake of prosperous information and progressive technologies, there have been more and more digital data saved in assorted storage devices such as flash disks, portable hard disks, etc., not the least of which are popular flash disks gradually in place of conventional floppy disks and hard disks and indispensable to information-related business due to advantages like lightness and portability.

However, for convenient portability and plug-and-play effect, a conventional flash disk with small and exquisite external design usually causes a problem of internal data easily embezzled instead despite its convenience provided to a user. It is conceivable that internal data in a conventional flash disk which is captured by one illegal user occasionally is totally taken in spite of a write protector mechanism rather than a function to conceal data saved inside. In addition, notwithstanding an extra multi-port connector installed on one USB port, which is plugged by one flash disk originally, to embody data in multiple flash disks accessed by one single USB port simultaneously, a situation that data saved in a conventional USD flash disk is illegally copied or reproduced is still inevitable.

### SUMMARY OF THE INVENTION

For the purpose of avoiding the problem mentioned previously, a principal object of the present invention is to provide a cascaded combination structure of flash disks to create security function for data protected but not stolen by any illegal user to develop a function assuring safety of data in a flash disk in two cascaded modes at least.

An additional object of the present invention is to provide a cascaded combination structure of flash disks to create security function which is conveniently employed in both an easily-understood display manner and a simple operating method.

The objects of the present invention and the techniques for problems solved are embodied in a technical scheme shown as follows. As one disclosure for a cascaded combination structure of flash disks to create security function, the present invention comprising a plurality of data disks and a key disk has one of the data disks at least partitioned into both a public zone and a private zone matched with the key disk in which a public program is installed to allow the private zone displayed and accessed when the key disk is series-connected to the data disks.

The objects of the present invention and the techniques for problems solved are further embodied in a technical scheme shown as follows.

In said cascaded combination structure of flash disks, the key disk is characteristic of an external form practically identical to those of the data disks.

In said cascaded combination structure of flash disks, each data disk is equipped with a USB adapter port for series connection between data disks or between the data disk and the key disk.

In said cascaded combination structure of flash disks, the memory sizes of the public zone and the private zone are allowed to be repartitioned with the public program.

In said cascaded combination structure of flash disks, the public program is graphically displayed in one window at repartition.

In said cascaded combination structure of flash disks, the public zone accommodates a standard memory size.

In compliance with technical schemes shown previously, the present invention for a cascaded combination structure of flash disks to create security function possesses the following advantages and effects:
1. As one technical measure, a specific combination of data disks and a key disk due to the former partitioned into a private zone matched with the latter and the latter with a public program allowing the private zone displayed and accessed prohibits an illegal user from reading data saved in a private zone of a lost or stolen data disk, and is also taken as general cascaded flash disks to protect data from an illegal user's theft.
2. As one technical measure, a specific combination of data disks and a key disk with USB adapter ports designed on the former for series connection between data disks or between a data disk and a key disk embodies both an extended memory capacity and data displayed and concealed under control of a key disk.
3. As one technical measure, a specific combination of data disks and a key disk due to a public program graphically displayed in a window during repartition is characteristic of an easily-understood display and a simple application in favor of a user's operations.

### BRIEF DESCRIPTION OF THE DRAWINGS

- FIG. 1: is a perspective view for one embodiment of the cascaded combination structure of flash disks, according to the present invention.
- FIG. 2: is a block diagram for one embodiment of the cascaded combination structure of flash disks, according to the present invention.
- FIG. 3: is a sectional view of a data disk in one embodiment of the cascaded combination structure of flash disks, according to the present invention.
- FIGS. 4 to 46: are schematic diagrams for pages of a public program operated on one computer in one embodiment of the cascaded combination structure of flash disks, according to the present invention.

### DETAILED DESCRIPTION OF THE PREFERRED EMBODIMENT

The detailed embodiments of the present invention are illustrated as follows. It is notable that only the invention-related components (with their quantity, shapes, and sizes disproportionately drawn or some dimensions magnified or simplified compared to othe relevant dimensions for clear descriptions) and their combinations are shown herein because these drawings as simplified schematic diagrams symbolically illustrate a basic structure or embodiments for the present invention. In constrast to a selective arrangement represented herein, the detailed layout for components with the practical quantity, shapes, and sizes are complicated possibily.

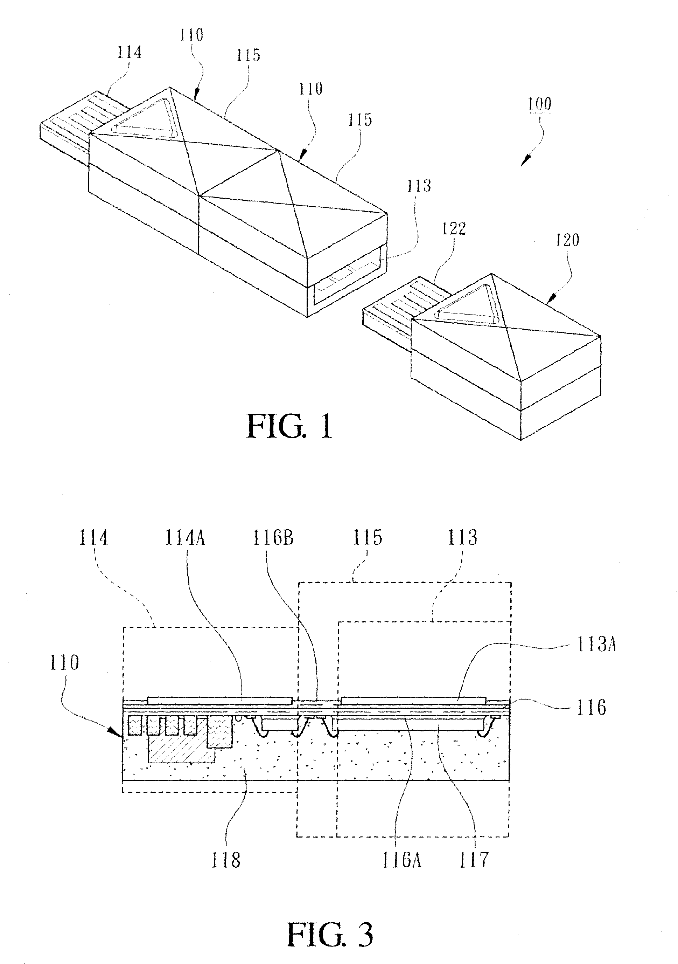

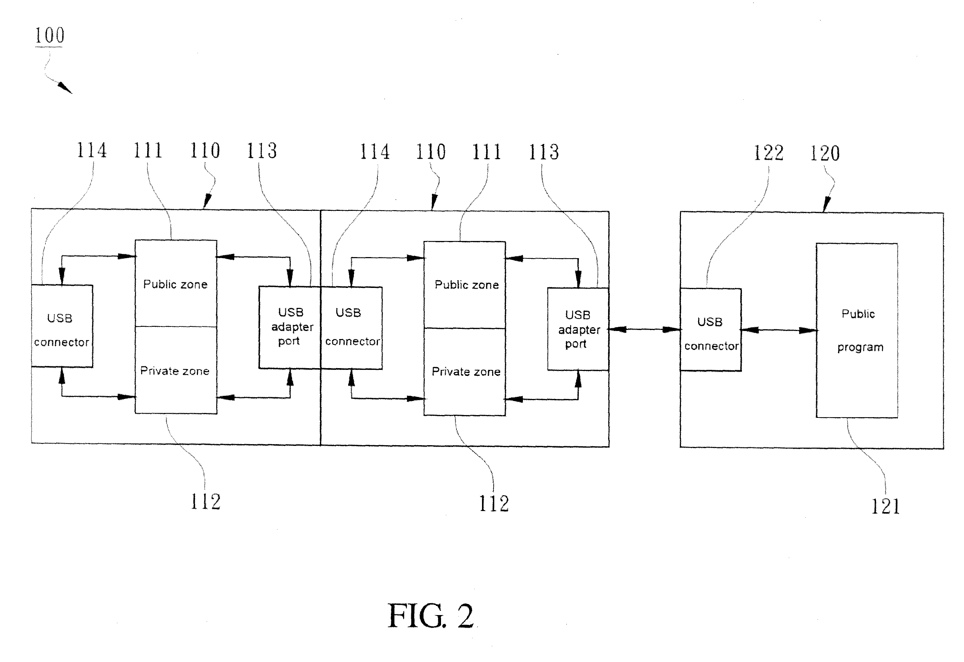

Referring to FIG. 1, a perspective view, and FIG 2, a block diagram, which illustrate an embodiment of the present invention for a cascaded combination structure of flash disks to create security function comprising a plurality of data disks 110, a key disk 120 wherein one of the data disks 110 at least is partitioned to a public zone 111 and a private zone 112 matched with the key disk 120. With its public zone 111 providing data accessed, each data disk 110 has a function identical to that of a general flash disk. When the key disk 120 is series-connected to the data disks 110, the private zone 112 is displayed and accessed due to a public program 121 installed in the key disk 120. In this regard, a USB adapter port 113 and a USB connector 122 designed in each of the data disks 110 and the key disk 120 respectively are taken as interfaces for series connection between the data disks 110 or between the key disk 120 and the data disks 110 wherein the key disk 120 is identical to the data disks 110 in their externals practically. For instance, as shown in FIG. 1 for one preferred embodiment, the externals of both the key disk 120 and the data disks 110 are rectangular solids. In another different embodiment, both the key disk 120 and the data disks 110 have cylindrical or cubic externals, or even other different original shapes.

Additionally, the cascaded combination structure of flash disks 100 has the memory sizes of the public zone 111 and the private zone 112 repartitioned by the public program 121 which is graphically displayed in one window at repartition and favorable to both important data governed and concealed by one user himself (or herself) and a user's easy operations through a graphic window interface (shown as follows). In practice, the public zone 111 is configured with standard memory sizes, for instance, 512M, 1G, 2G, 4G, or 8G. Preferably, the memory size of the public zone 111 can be adjusted to a user's preferred specification. In addition, the public zone 111 only rather than the private zone 112 in a lost or stolen data disk 110 is read or browsed by one illegal user, who does not have the key disk 120, and the lost data disk 110 is mistakenly decided as a general cascaded flash disk by other users. Thus, the present invention protecting data concealed by one user from an easy disclosure is applicable to data access and secrecy of confidential business data.

As shown in FIG. 3, each data disk 110 also specifically comprises a case 115, a USB connector 114, a substrate 116, a memory chip 117 at least, and a package 118. In a preferred embodiment, the case 115 manufactured in a plastic material had rectangular externals similar to a small building block easily grasped by one user or series-eonnected in use. Furthermore, the memory chip 117 arranged on an inner surface 116A of the substrate 116 and a controller chip are encapsulated by the package 118 which is also formed on the inner surface 116A of the substrate 116, and both the memory chip 117 and the package 118 are within the case 115. At both sides of an outer surface 116B of the substrate 116, there are a plurality of LTSB contact fingers 114A and a plurality of USB adapter fingers 113A extending to the USB connector 114 and the USB adapter port 113 respectively wherein the USB contact fingers 114A electrically connect to the memory chip 117 and the USB adapter fingers 113A as extended terminals of the USB contact fingers 114A electrically connect to the USB contact fingers 114A of another data disk 110. In shapes, the USB contact fingers 114A are identical to the USB adapter fingers 113A. In this embodiment, the memory chip 117 is a flash memory without data lost at power disconnected. Thus, the data disks 110 of the present invention embody an effect for cascaded and extended memories, and the corresponding key disk 120 protects data saved in the private zones 112 of the data disks 110.

### Pages for booting and initialization:

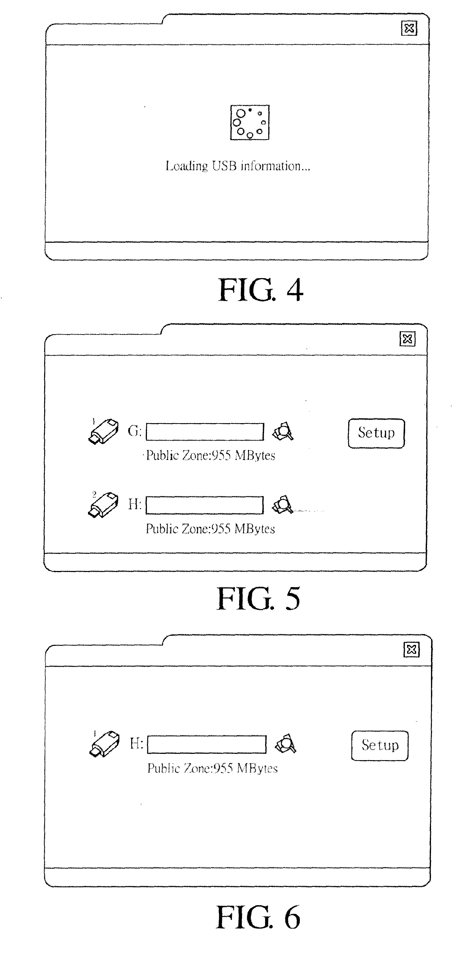

Referring to drawings from FIG. 4 to FIG. 6 which illustrate software added in the present invention for the cascaded combination structure of flash disks to create security function 100 on the Windows OS, that is, the present invention's public program 121 installed in the key disk 120 and automatically executed to develop a hardware-based data protection function in the cascaded combination structure of flash disks 100. In the present invention, two regions, public zone 111 and private zone 112, in a data disk 110 corresponding to the key disk 120 are planned by one user employing the public program 121 which is installed in the key disk 120 for both plug-and-play as well as direct management of the cascaded data disks 110. Further, with some parts partitioned into the private zone 112, one of the data disks 110 is series-connected to the corresponding key disk 120 for displaying files saved in the private zone 112. In case of the corresponding key disk 120 failing to be series-connected to the data disk 110, files in the public zone 111 only are checked and accessed by one user, but files saved in the private zone 112 and kept as a hidden status are not displayed in the Windows OS.

In the embodiment as shown in FIG. 1 again, the cascaded combination structure of flash disks 100 comprises two data disks 110 and a corresponding key disk 120, but comprises a key disk 120 series-connected to multiple (two or more) data disks 110 in different embodiments.

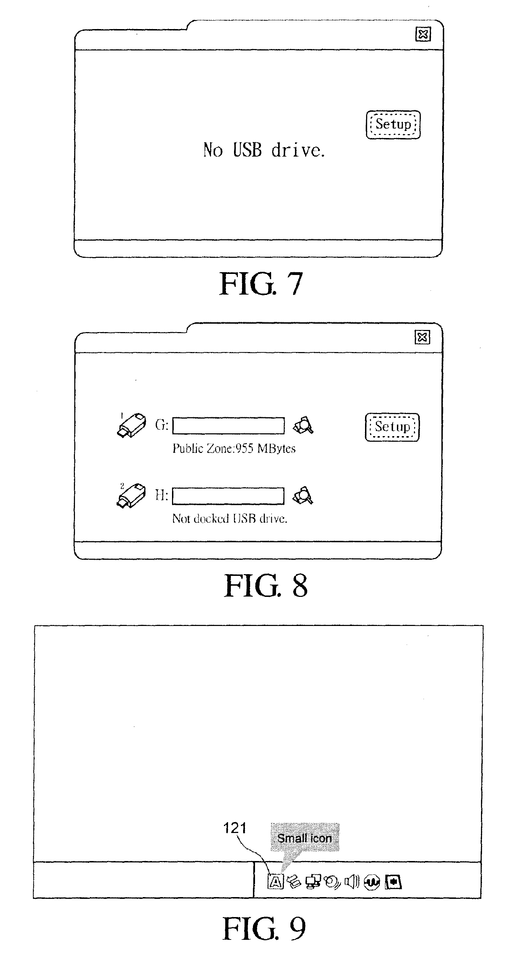

In detail, the public program 121 has been installed in the key disk 120 prior to delivery; a method to partition a public zone and a private zone is shown as follows. When the cascaded combination structure of flash disks 100 is plugged to a computer's USB port, the public program 121 will be activated and executed automatically. In this embodiment, one front-exposed USB connector of a data disk 110 is coupled with one computer's USB port. As shown in FIG. 4 for the page of initialization of the public program 121, a message of "Loading USB information..." represents information correlated with the data disks 110 are been capturing by the system. With the public program completely activated, the page for initialization will be transferred to FIG. 5 from FIG. 4. In FIG. 5, there are two data disks (G and H) with their private zones not partitioned wherein the first data disk corresponds to Drive G with a capacity of 955 Mbytes in its public zone but without a private zone, and the second data disk corresponds to Drive H with a capacity of 955 Mbytes in its public zone but without a private zone. As shown in FIG 6, there is only one data disk (H) series-connected to the key disk; as shown in FIG 7, there is the key disk only without a data disk so that a message of "No USB drive" is shown on a display in the case of no data disk series-connected. Additionally, as shown in FIG. 8 for another situation, a private zone and a public zone cannot be repartitioned from the second data disk (H) by the system and a message, "Not docked USB drive", is shown on the display because the private zone existing in the second data disk (H) already is not partitioned by the current series-connected key disk. Accordingly, a private zone in a data disk is not allowed to be displayed in any unmatched key disk but in a correctly matched key disk series-connected according to the present invention. In short, the message of "Not docked USB drive" displayed implies the data disk and the key disk categorized to different groups and files in a private zone of a data disk failing to be managed by the key disk which belongs to a different group.

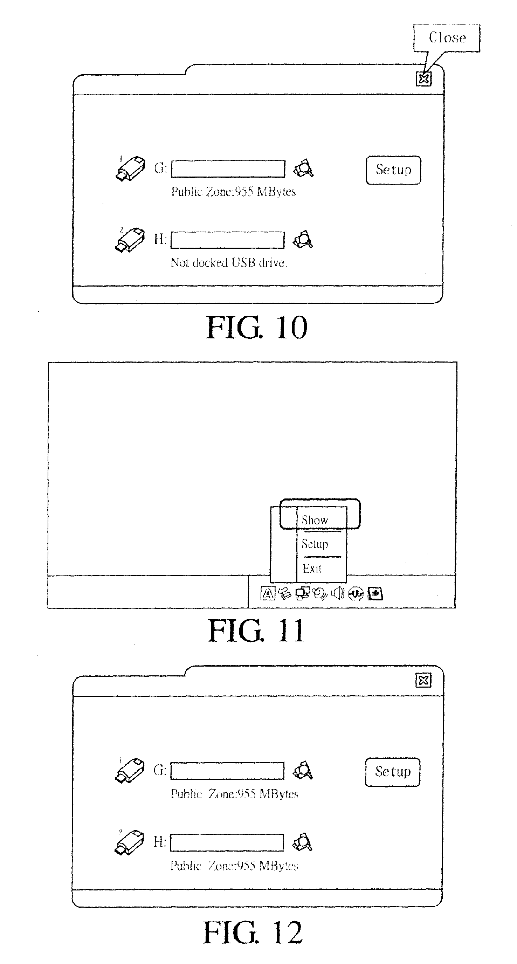

As shown in FIG. 9 for a page of initialization, there is one more small icon added in the system tray of the operating system and implying the public program 121 activated. As shown in FIG. 10, the public program will be concealed forthwith but not directly disabled when a [Close] button in the window for initialization is pressed by one user. Further, the window for initialization (as shown in FIG. 10) is displayed again by double clicking on the small icon mentioned in FIG. 9, or in another way shown in FIG. 11 with a cursor moved to the small icon and a mouse right clicked to press the [Show] option from a displayed list. As shown in FIG. 11 again, the [Exit] option in the list can be pressed if a user intends to disable the public program 121. Additionally, the public program will be disabled and terminated forthwith with the key disk directly unplugged by one user.

### Pages for partitions:

When one user intends to partition a data disk 110 at least into the private zone 112 and the public zone 111, the data disk 110 and the key disk 120 need to be series-connected first and further plugged to one computer for the public program 121 in the key disk 120 automatically executed. At this point, there are the public zones 111 (that is, no partition executed) in the data disks 110 only, or there is the data disk 110 which has been partitioned is categorized to the same group of the key disk 120. Referring to one of the said methods, a user is able to repartition sizes of a private zone and a public zone.

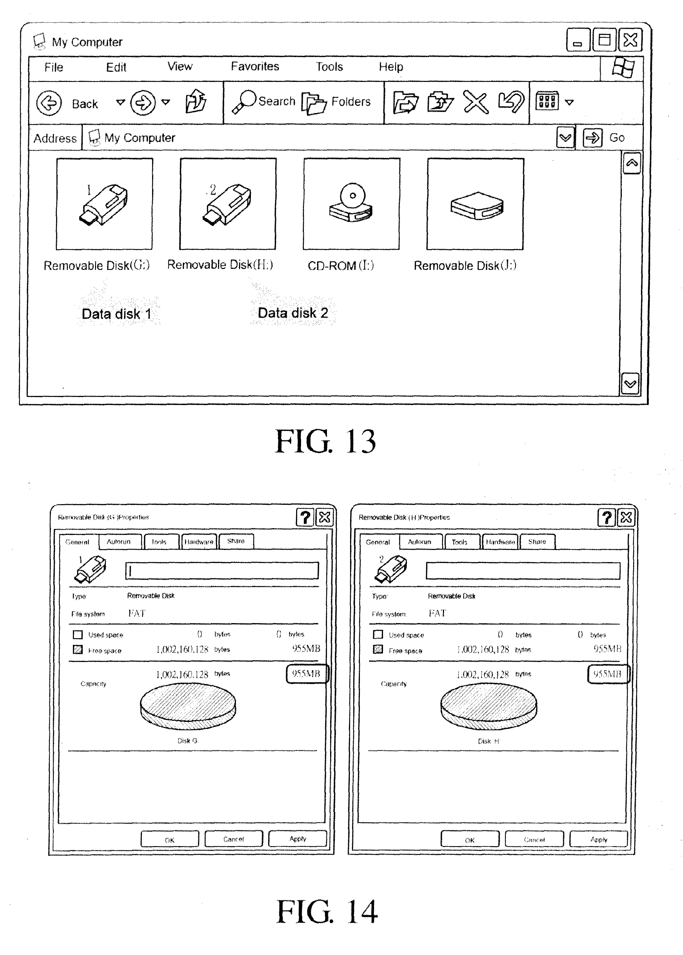

As shown in FIG. 12, there are two non-partitioned data disks (G and H) with an identical capacity of 955 Mbytes used to illustrate a process of partition. First, with the cascaded combination structure of flash disks plugged in a USB port on one computer host or one laptop, the page for the public program activated is shown in FIG. 12 and the public zones of the data disks are displayed due to no private zone partitioned. As shown in FIG 13, the data disks in "My Computer" correspond to removable disks G and H separately and different icons given to these two disks by the public program are observed. Referring to FIG. 14 which illustrates two disks with an identical capacity of 955 Mbytes and taken as public zones is ensured in the Windows Explorer Properties.

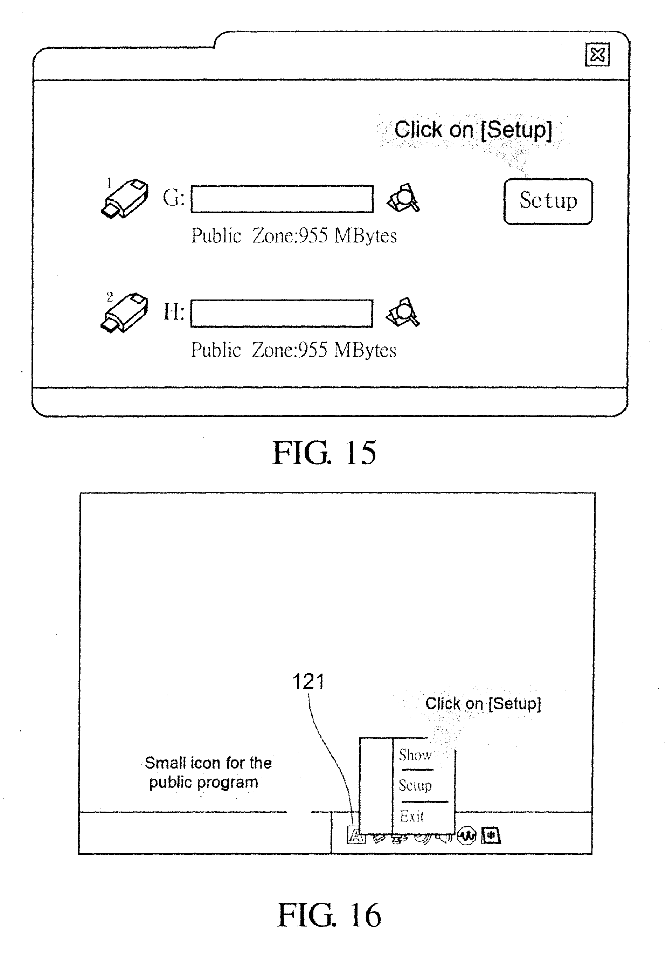

Next, the page for partition switched by the public program displays two methods: (1) Click on the [Setup] button in the page for initialization, as shown in FIG. 15; (2) Move a cursor to a small icon for the public program 121 on the system tray and right click on the mouse to click on the [Setup] in the list, as shown in FIG. 16.

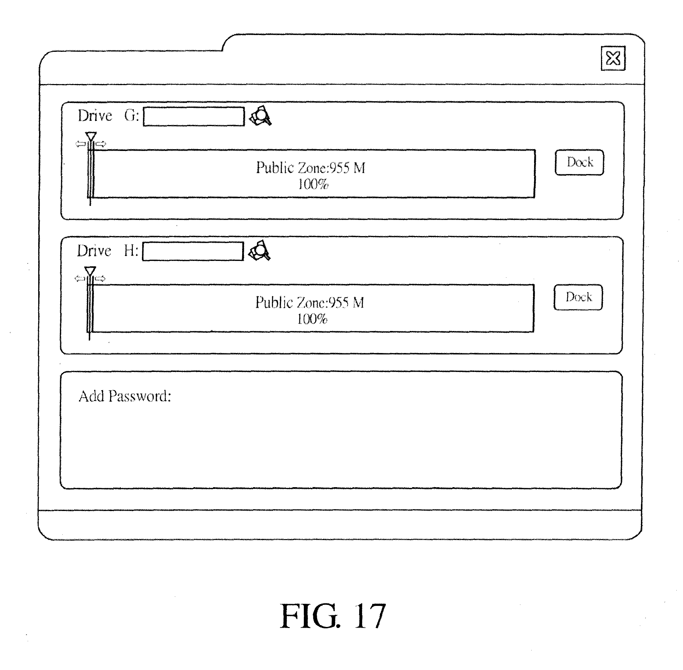

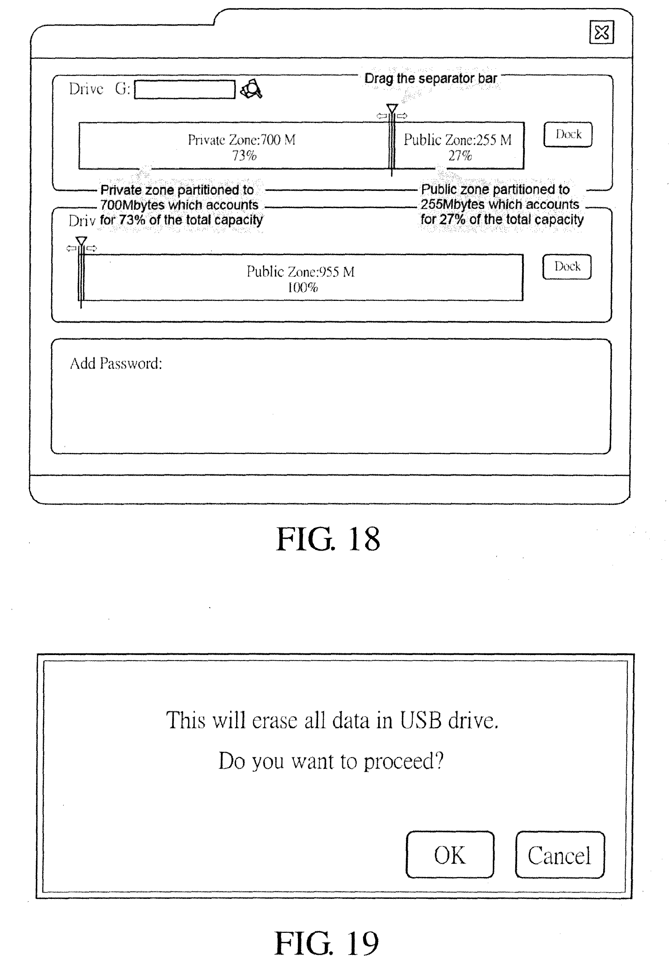

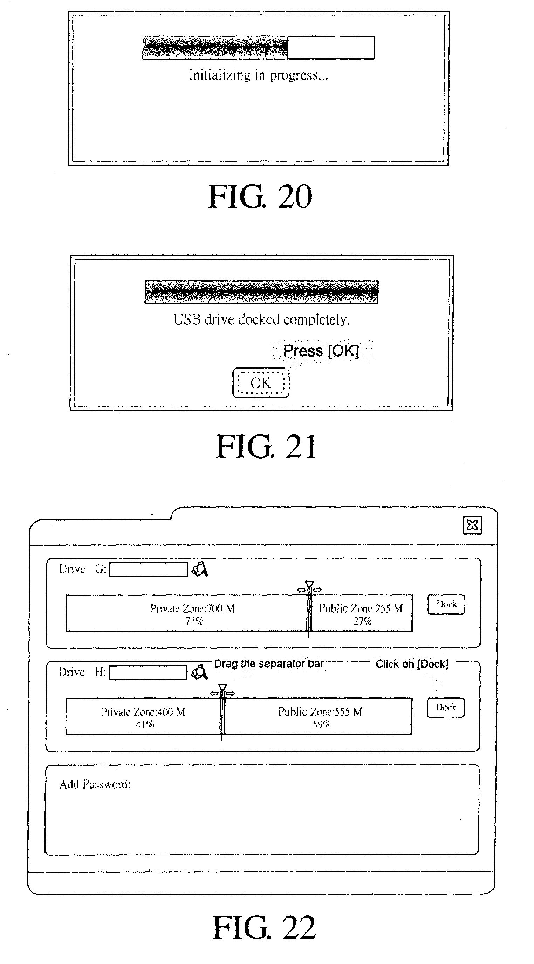

As shown in FIG 17, the page displays the partition-related process mentioned previously. In this embodiment represented graphically, both the first data disk (Drive G:) and the second data disk (Drive H:) include 100% complete public zones (955M) and have separate separator bars on the left hand side of tables representing public zones of data disks. As shown in FIG. 18 to partition 700Mbytes as the private zone and 255Mbytes as the public zone of the first data disk (Drive G:), a user can adjust a corresponding separator bar to the right hand side by holding a mouse and then press the [Dock] button beside the public zone to activate partition with a desired ratio for partition reached. As shown in FIG. 19, a dialog box will be displayed by the system to allow a user to reconfirm an action to delete current files in a data disk during partition. The partition applied to the data disk 110 can be canceled and activated by pressing the [Cancel] button and the [OK] button, respectively. As shown in FIG. 20, the data disk 110 is partitioned by the system (Initializing in progress) when the [OK] button is pressed to confirm partition by one user. As shown in FIG. 21, a message of "USB drive docked completely" and the [OK] button are displayed with partition completed, and the message window will be closed with the [OK] button pressed.

As shown in FIG. 22, other data disks can be also partitioned by dragging a corresponding separator bar and clicking on the [Dock] button. For instance, 400Mbytes and 555Mbytes among the memory area are partitioned to the private zone and the public zone in the second data disk 110 (Drive H:). Furthermore, a password is allowed to be configured in "Add Password". The window for initialization will be returned with the button on the top left corner pressed depicting a "X" in a box.

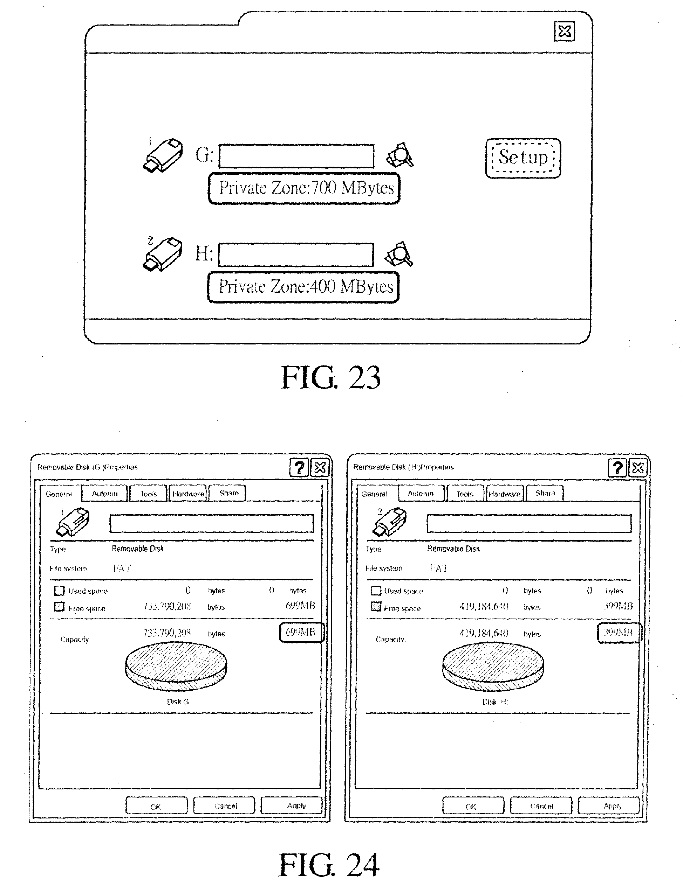

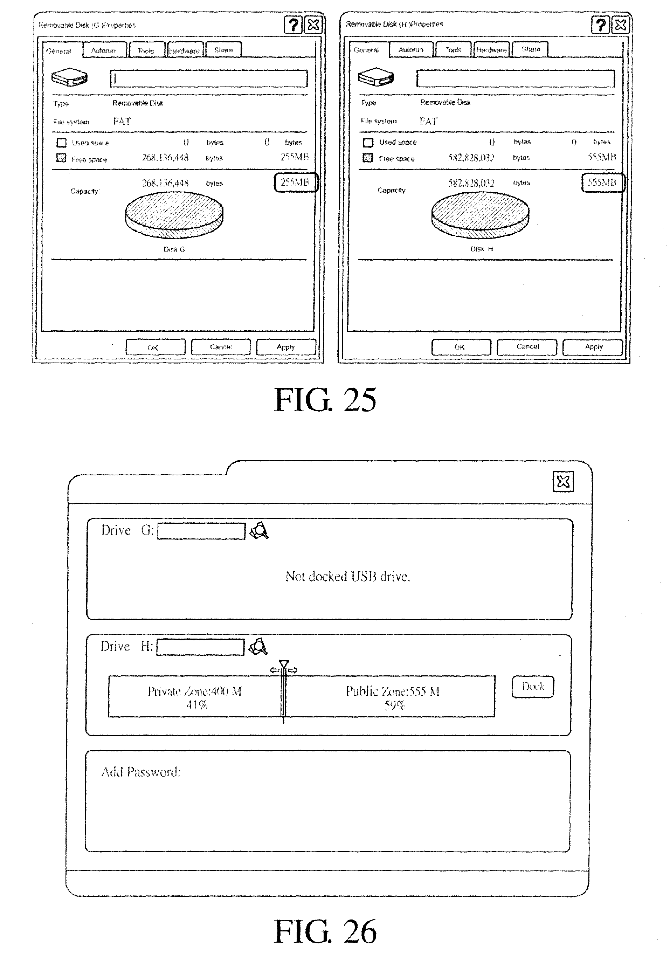

Later, the data disks 110 and the key disk 120 are series-connected and linked to the operating system. As shown in FIG 23, there are two data disks (G and H) with individual capacities, 70Mbytes and 400Mbytes, for partitioned private zones. Referring to FIG. 24 which illustrates the contents of two removable disks inspected in the Windows Explorer properties by one user who can observe and operate private zones of the removable disks, 669MB and 399MB displayed in the Windows Explorer properties, because of the key disk cascaded and the public program enabled. At this point, an object to be operated in the data disk is transferred to the public zone in case of the key disk removed or the public program disabled. As shown in FIG. 25, 255MB and 555MB displayed in the Windows Explorer properties are public zones of removable disks when the key disk is removed. In short, a confidential file and a general file can be saved in the private zone and the public zone by one user, respectively. In the case of any confidential file required to be accessed, one data disk (removable disk) needs to be series-connected to a corresponding key disk, or general files only can be accessed when a single data disk (removable disk) is plugged in one computer. Thus, any illegal user intending to embezzle files saved in the private zone without the key disk still fails to access/browse confidential data or even has no idea for the private zones hidden in the data disks (removable disk).

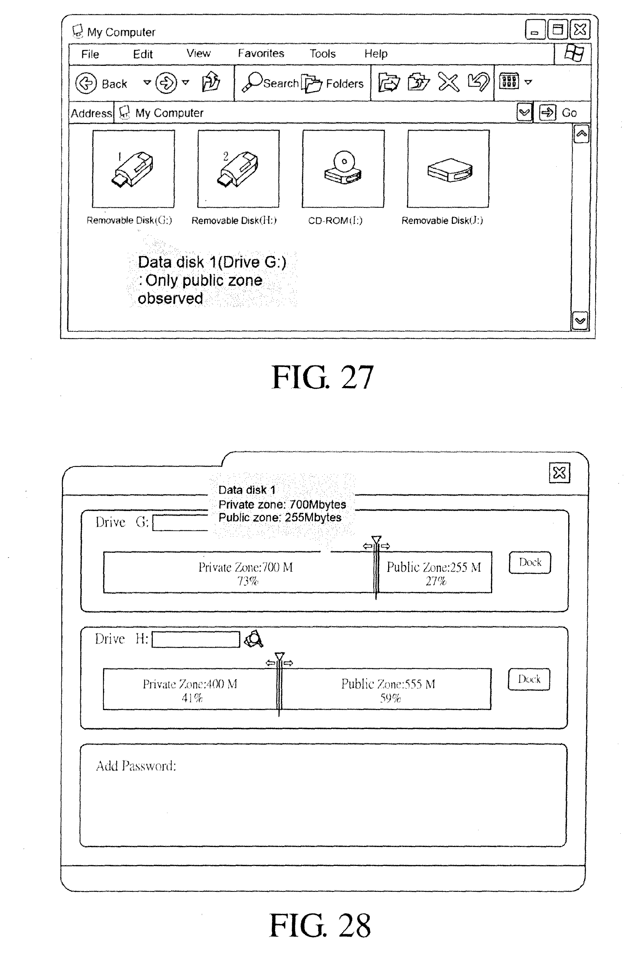

As shown in FIG. 26, a message of "Not docked USB drive" is displayed when any key disk rather than the currently cascaded key disk is used to partition sectors of the first data disk (Drive G:) which comprises the private zone and the public zone. Thus, sector sizes cannot be partitioned in the public program, and a gray icon marked on the data disk (Drive G:) by the system implies no partition allowed. At this point, only the public zone of the data disk (Drive G:) is observed, as shown in FIG. 27. In the case of a requirement to assign the said first data disk (Drive G:) controlled by another key disk, an exclusive method is to find the initial corresponding key disk which is employed to reduce the data disk (Drive G:) to own a 100% public zone without a private zone. Then, the data disk (Drive G:) is allowed to match any key disk.

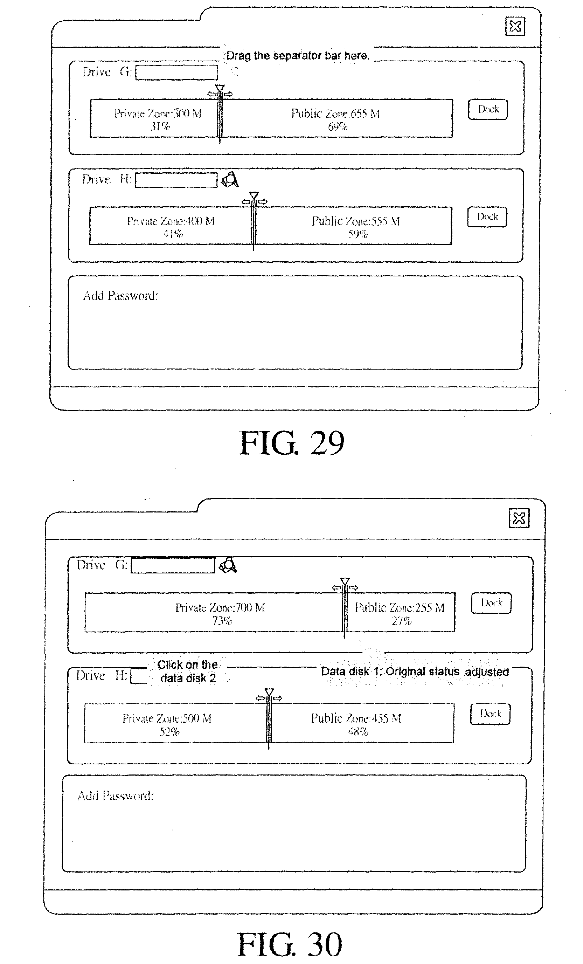

Referring to drawings from FIG. 28 to FIG. 30 which illustrate a method to adjust partition of a data disk. FIG. 28 displays one page for a partitioned system: A public zone (255M) and a private zone (700M) have been partitioned in the first data disk (Drive G:); a public zone (555M) and a private zone (400M) in the second data disk (Drive H:). As shown in FIG. 29, an initial status of the Drive G (prior to a separator bar dragged) will be automatically resumed by the system when another data disk (Drive H:) is directly clicked on with the separator bar for the first data disk (Drive G:) having been dragged (to the left hand side for its public zone of 655M created) but the [Dock] button not pressed. As shown in FIG. 30, the public zone of the first data disk (Drive G:) with its size automatically adjusted to 255M avoids a problem of some private zones lost by one user who carelessly moves the separator bar. Accordingly, a corresponding [Dock] button pressed by one operator with a separator bar having been dragged is indispensable to execution of a data disk partitioned. In other words, there is only one data disk partitioned by the program each time.

### Encryption:

After a password for the system was assigned by one user, a login window will be in place of a window for initialization as the public program 121 is activated. A correct password keyed in by one user on a login window will allow this user enter the system, or both execution of various functions of the public program 121 and employment of the private zone 112 of each data disk 110 will be disabled. The detailed operations are shown as follows:

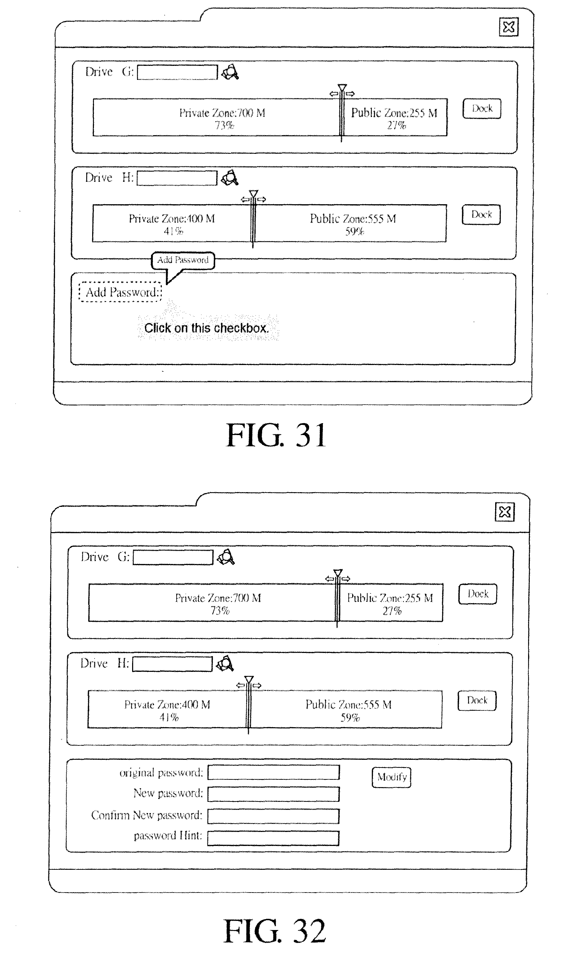

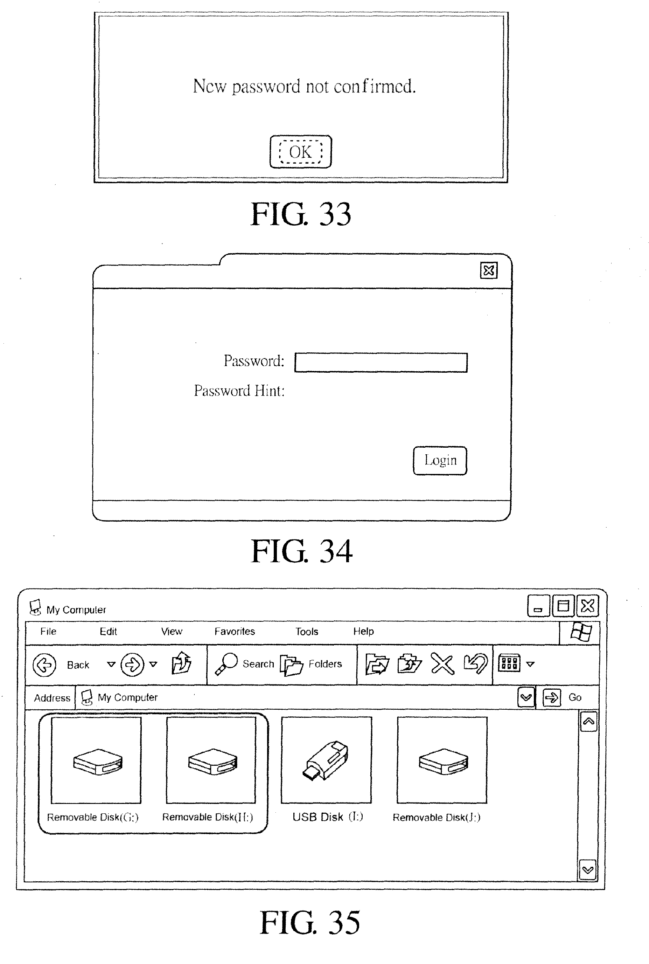

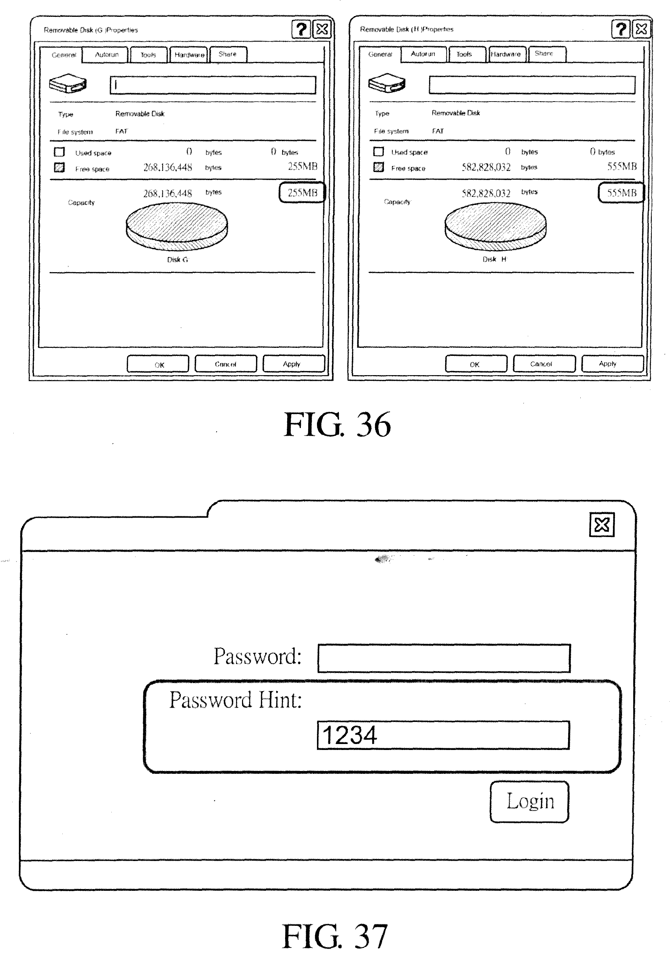

As shown in FIG. 31, there is one checkbox "Add Password" displayed on the lowest block inside the window and clicks on this checkbox by a cursor. Next, there are four fields, "Original Password", "New Password", "Confirm New Password", and "Password Hint" displayed in the block from top to down, as shown in FIG. 32. In the case of a password created by one user, a desired password should be keyed in on "New Password" as well as "Confirm New Password" repeatedly to confirm an identical password inputted on both fields, and a hint in compliance with one user's preference and convenience is keyed in on "Password Hint" to remind a user of the initially preset password which is forgotten carelessly. (Keeping this field blank is allowable.) With all information keyed in, the [Modify] button should be pressed to save all data. In case of any difference between "New Password" and "Confirm New Password" detected, a warning message of "New password not confirmed" which implies two different passwords keyed in by one user will be noticed to a user by the system, and a new password should be inputted again to confirm its correctness. As shown in FIG. 34, if a password is successfully designated, a login window including "Password" and "Password Hint" will be displayed with the public program activated. It should be pointed that the files in the public zone only can be observed when "My Computer" is opened by one user who intends to access the data disks (Removable Disk(G:) and Removable Disk(H:)), as shown in FIG. 35. As shown in FIG. 36, the Windows Explorer properties can be used to inspect the data disks (Removable Disk(G:) and Removable Disk(H:)) wherein the capacities of the data disk G (Removable Disk(G:) and the data disk H Removable Disk(H:), 255MB and 555MB respectively, are capacities of public zones of the data disks (Drive G and Drive H) exactly compared to FIG. 32.

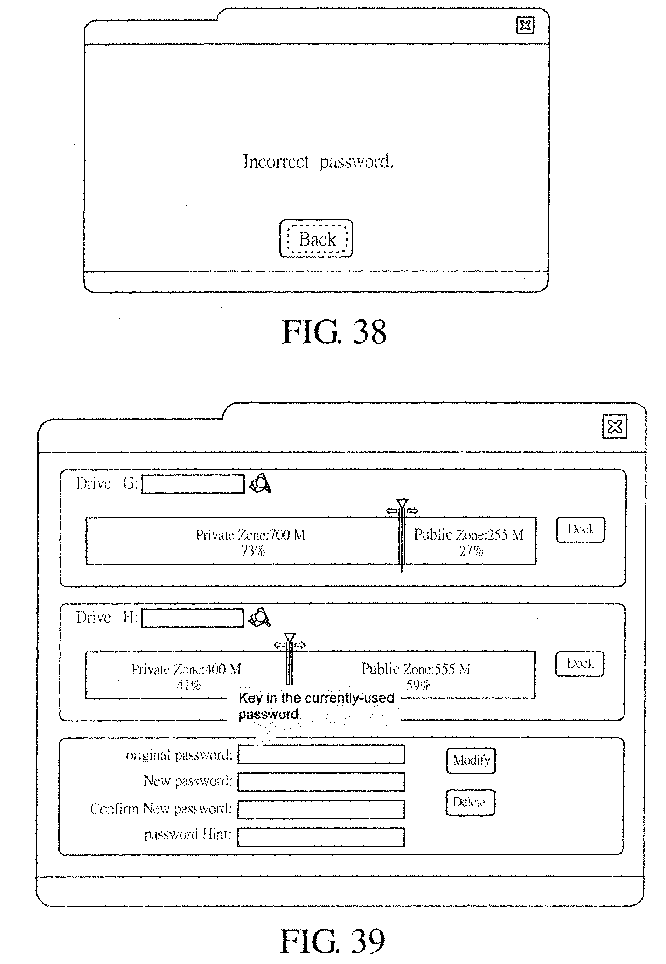

As shown in FIG. 37, a hint string configured by one user could be displayed below the checkbox "Password Hint" checked by the user as the user's reference to recall a previously-setup password which is further inputted in the "Password" field to complete a login by clicking on the [Login] button. For an incorrect password keyed in, a message of "Incorrect password" displayed on a screen will be hinted to a user by the system, as shown in FIG. 38. At this point, the [Back] button should be clicked on to return a login window for input of a correct password. The public program will be disabled automatically in case of wrong passwords continuously keyed in three times.

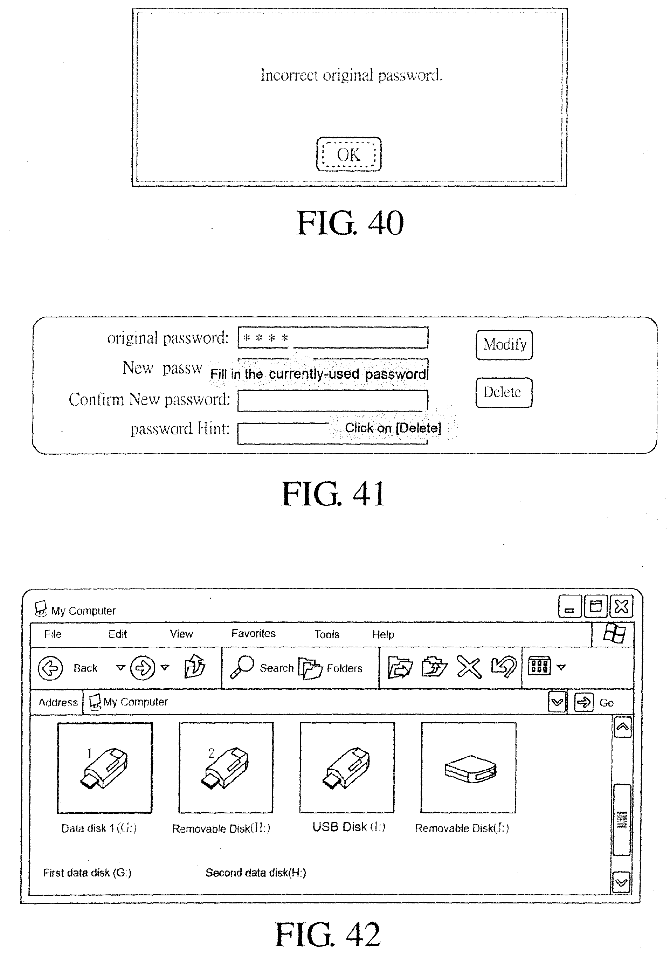

As shown in FIG. 39, a window for partition is available to changing a password to a user's desired new one. Before clicking on the [Modify] button to save a new changed password, a user should key in a currently-used password in the field "Original Password" on the lowest block of the window, a new one in both the field "New Password" and the field "Confirm New Password" confirmed by the system, and an optionally new hint string in the field "Password Hint" according to his (her) preference. For an incorrect password in the field "Original Password" detected, the operation for update of a new password is unavailable and a message of "Incorrect original password" is displayed to hint one user a password in "Original Password" not matching the previous setup. Thus, a user's disturbance or inconvenience caused by a password randomly changed by other users can be avoided. Furthermore, as shown in FIG. 41 for a method to cancel a password function which is similar to updating an original password, the currently-used password as an identification string needs to be filled the field "Original Password" only rather than other fields and be canceled by clicking on the [Delete] button to resume the data disk unprotected by any password. In this situation of a password completely canceled, a password with the public program 121 activated is not required to be keyed in.

### Setup of a disk label:

In the present invention, an identification of a data disk 110 in the Windows Explorer can be easily identified due to a unique disk label designated to and marked on each data disk 110 by the public program 121. In windows for initialization and partition, there are label input fields corresponding to all data disks 110. It is notable that a disk label can be designated to the data disk 110 in the public program 121 whether the data disk 110 and the cascaded key disk 120 are categorized to one group or not.

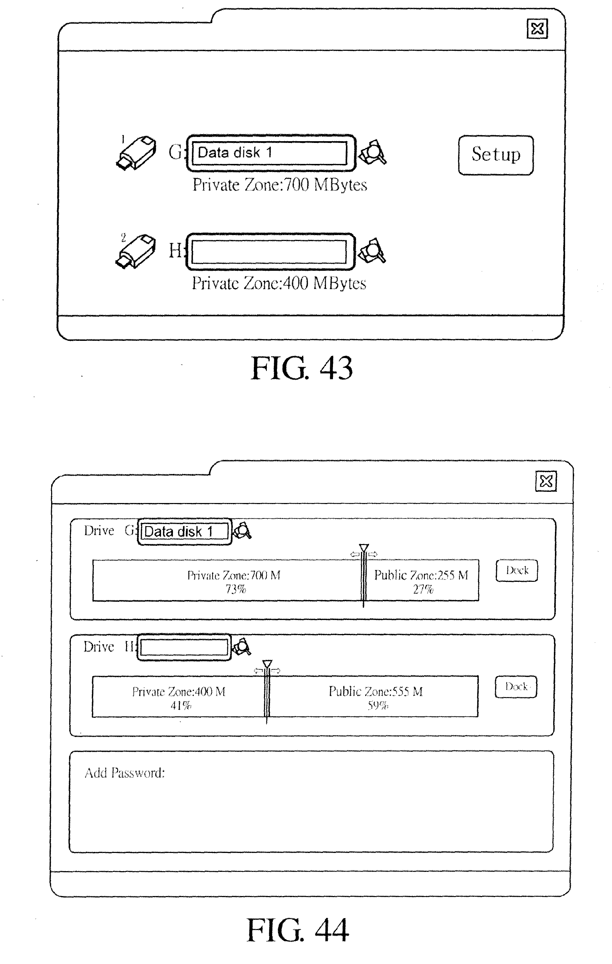

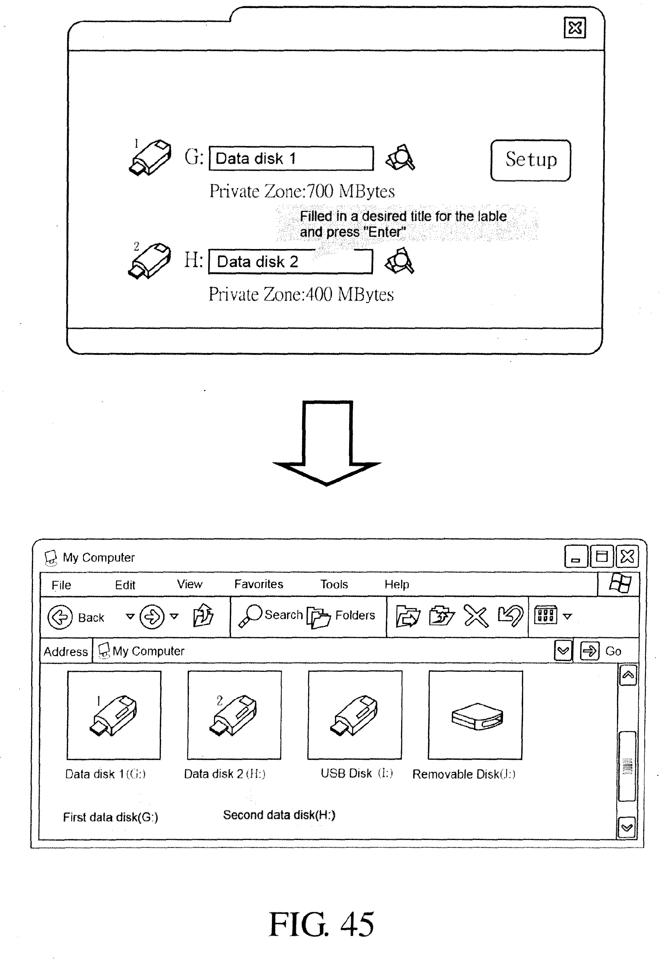

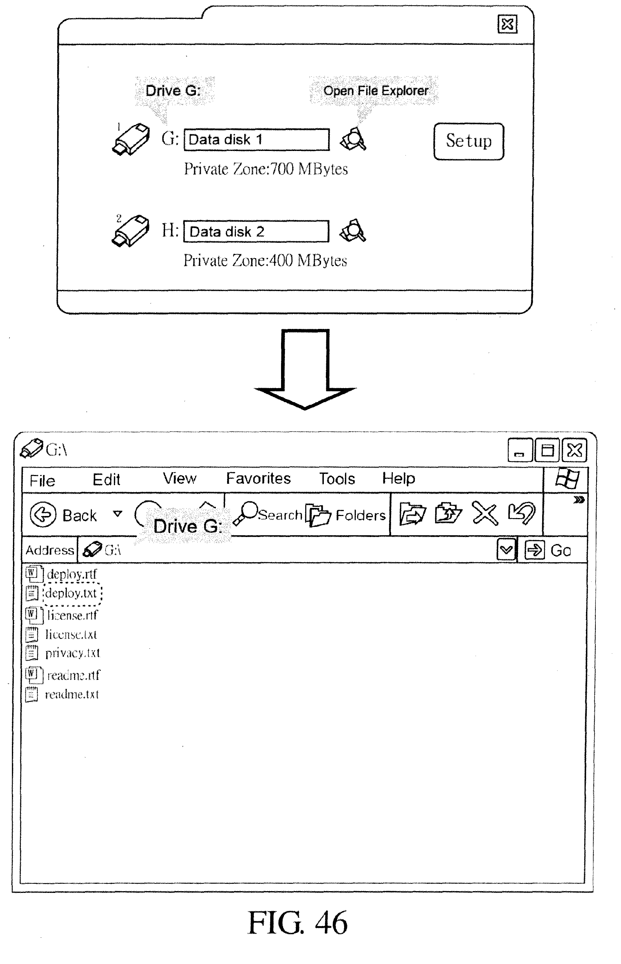

As shown in FIG. 42 which illustrates a label "Data disk 1" has been designated on the first data disk (G) and a label "Removable disk" on the second data disk (H) due to no label assigned to the second one in "My Computer". From the window initializing the public program as shown in FIG. 43, a label "Data disk 1" is marked on the right hand side of the data disk (G) and no string (blank) on the right hand side of the data disk (H). From the window for partition as shown in FIG. 44, a label "Data disk 1" is marked on the right hand side of the data disk (Drive G) and no string (blank) on the right hand side of the data disk (Drive H). Accordingly, as shown in FIG. 45, a desired title for one label (11 letters of the English alphabet (max.)) can be filled in the label input field on the top to add or change a label for each of the data disks (G and H) with "Enter" on a keyboard pressed by one user who intends to update a label. Then, the labels, "Data disk 1" on the first data disk (G) and "Data disk 2" on the second data disk (H), are marked in "My Computer". Finally, as shown in FIG. 46, there is one button "Open File Explorer" displayed as a magnifier icon on the right hand side of each label input field. When the button on the right hand side of the data disk (G) is pressed by one user, the data disk (G) will be opened as the Windows Explorer with one window "G:\" on the screen to display all data in the data disk (G), for instance, "deploy.rtf", "deploy.txt", "license.rtf", etc.

The foregoing disclosure and description are illustrative and explanatory of preferred embodiments only rather than limitations expressed in any form to the present invention. The disclose illustrated in preferred embodiments as stated is not intended for limitations to the present invention, and therefore any simple revision or equivalent modification and decoration of the embodiments without departing from the scope of the present invention will be possible by those who are familiar with skills in the art.

## Claims

1. A cascaded combination structure (100) of flash disks to create security function comprises a plurality of data disks (110) and a key disk (120) wherein one of the data disks at least is partitioned to a public zone (111) and a private zone (112) matched with the key disk which is series-connected to the data disks and allows the private zone displayed and accessed by a public program (121) of the key disk.

2. The cascaded combination structure of flash disks to create security function according to Claim 1 wherein the key disk and the data disks have identical externals in practice.

3. The cascaded combination structure of flash disks to create security function according to Claim 2 wherein each data disk has a USB adapter port (114) for series connection between the data disks or between the data disk and the key disk.

4. The cascaded combination structure of flash disks to create security function according to Claim 1 wherein the memory sizes of both the public zone and the private zone are repartitioned by the public program.

5. The cascaded combination structure of flash disks to create security function according to Claim 4 wherein the public program is graphically displayed at repartition.

6. The cascaded combination structure of flash disks to create security function according to Claim 1 wherein the public zone has a memory size matching standard specifications.
